# FASCICULE DE BREVET EUROPEEN

(11) **EP 0 277 884 B1**
(45) Date de publication et mention de la délivrance du brevet: **14.04.1993**
(21) Numéro de dépôt: 88400249.4
(22) Date de dépôt: 03.02.1988
(51) Int. Cl.: F01D 9/04

(54) **Turboréacteur multiflux à couronne externe de redresseur de soufflante frettée sur le carter**
In das Gehäuse eingepresster Aussenring eines Stators für den Bläser eines Turbotriebwerks
Outer stator shroud of a fan jet engine fitted on the fan housing

(30) Priorité: 05.02.1987 FR 8701394
(43) Date de publication de la demande: 10.08.1988
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Feuvrier, Thierry, F-78590 Noisy Le Roi (FR); Forestier, Alexandre, F-77000 Vaux Le Penil (FR)
(74) Mandataire: Moinat, François

(56) Documents cités:
- EP-A- 0 017 306
- FR-A- 2 321 616
- GB-A- 991 357
- GB-A- 2 115 883
- US-A- 2 914 300
- US-A- 3 442 442

## Description

La présente invention concerne la réalisation des carters externes de flux secondaire des turboréacteurs multiflux et plus particulièrement l'intégration d'une couronne externe de redresseur de soufflante sur un tel carter et les moyens de fixation des aubes de redresseur sur la couronne externe.

Le brevet français FR 2 321 616 au nom de la demanderesse montre un exemple de réalisation d'un redresseur de soufflante dans lequel chaque aube possède une tête cruciforme vissée sur le carter, la vis de fixation maintenant un anneau d'étanchéité qui prend appui sur les bords de panneaux acoustiques situés en amont et en aval du redresseur pour reconstituer la paroi extérieure de délimitation du flux d'air secondaire.

Une telle construction présente l'inconvénient de nécessiter deux vis de fixation pour chaque aube de redresseur et des vis de fixation des panneaux acoustiques ce qui multiplie d'autant le temps de montage et augmente le coût de réalisation car le nombre de pièces nécessaires à l'assemblage est important.

D'autre part, on connait par le brevet FR 2 246 185 un aubage de stator de compresseur dont les aubes lisses sont encastrées en tête dans une virole de carter, des garnitures compressibles en fils métalliques tressés étant comprimés entre la virole de carter et une enveloppe externe vissée pour remplir une fonction d'amortissement de vibrations.

Un tel dispositif ainsi décrit est peu adapté à la réalisation d'un étage de redresseur de soufflante pour un turboréacteur multiflux car il ne permet pas ou difficilement le démontage unitaire des aubes de redresseur alors qu'il s'agit là d'une exigence particulière importante pour la maintenance de cette partie du moteur la plus sujette aux chocs par ingestion d'éléments extérieurs tels que des grêlons, des oiseaux..

La présente invention vise à simplifier la réalisation des viroles de carter externe de flux secondaire des turboréacteurs multiflux en simplifiant le montage des parties constituant le bord interne de la veine secondaire, et en diminuant le nombre de pièces qui le compose.

Elle vise généralement à permettre l'utilisation d'aubes lisses, filées ou forgées ou encore en matériau composite dans les redresseurs de soufflante ainsi réalisées tout en assurant un montage simple garantissant une bonne tenue des aubes aux vibrations et une démontabilité unitaire de telles aubes.

Elle vise enfin à simplifier la réalisation des parties acoustiques ou abradables situées le long de la veine.

L'invention a donc pour objet un turboréacteur multiflux à redresseur de soufflante du genre comportant un étage d'aubes fixes sans plateforme régulièrement disposées entre une couronne interne et une couronne externe tel que la couronne externe est constituée par une cartouche annulaire monobloc en matériau composite comportant d'une part deux bandes latérales pleines et épaisses dont la surface externe est frettée à l'intérieur du carter de flux froid du turboréacteur et dont la surface interne comporte deux lamages latéraux de support des bords de panneaux acoustiques disposés en amont et en aval de ladite cartouche, et comportant d'autre part entre les deux bandes latérales épaisses, une partie centrale amincie les reliant et percée d'encoches de fixation des aubes de redresseur.

Coopérant avec ces encoches, l'extrémité radialement externe de la pale de chaque aube du redresseur est surmontée d'un chapeau en élastomère surmoulé sur des stries de ladite extrémité, ledit chapeau comportant un bord externe élargi possédant une rainure délimitant deux lèvres, l'une externe venant s'accrocher sur la face externe de l'encoche de la partie centrale amincie de la cartouche et l'autre interne, venant se loger dans un lamage entourant l'encoche sur la face radialement interne de la cartouche.

D'autres caractéristiques de l'invention seront explicitées ci-après, ainsi que le mode de montage des aubes de redresseur, en regard des planches annexées parmi lesquelles :
- la figure 1 montre en semi-coupe longitudinale axiale un compresseur basse pression de turboréacteur multiflux incorporant l'invention ;
- la figure 2 montre en vue développée suivant II-II de la figure 1 la cartouche frettée portant les aubes ;
- la figure 3 montre le détail A de la figure 1 selon la face longitudinale d'une aube ;
- la figure 4 montre le même détail dans l'épaisseur de l'aube ;
- la figure 5 montre le détail B de la figure 1 d'un joint élastomère monté en pied de façon classique sur l'aube, vu dans le sens de l'épaisseur de l'aube ;
- la figure 6 montre une étape du montage des aubes de redresseurs telles que décrites ;
- la figure 7 montre une variante de réalisation de la cartouche externe dans laquelle la cartouche frettée est monobloc avec les supports des panneaux acoustiques et d'une cartouche abradable.

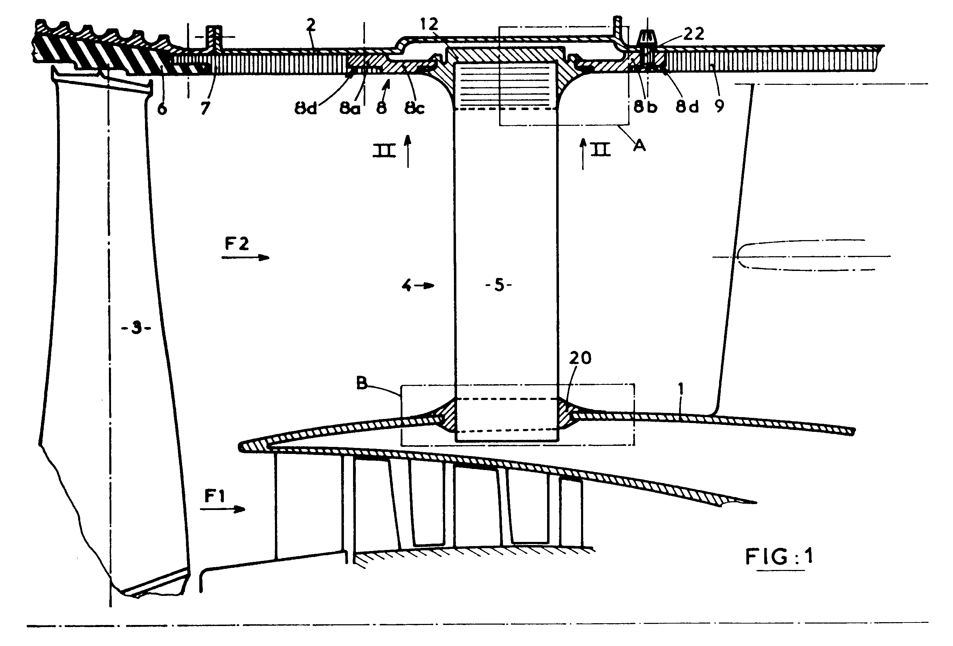

A la figure 1 a été représentée en demi-coupe axiale l'entrée du compresseur d'un turboréacteur multiflux. L'air pénètre dans le moteur et se sépare en un flux primaire F1 entrant dans le compresseur basse pression et un flux F2 passant dans un canal secondaire entourant le compresseur basse pression. La veine secondaire est limitée intérieurement par un carter intermédiaire 1 et un carter externe 2. L'air secondaire est dévié par un rotor de soufflante 3 puis redressé par un redresseur de soufflante 4 formé d'une grille d'aubes fixes 5.

Le carter externe 2 porte successivement et de façon connue de l'amont vers l'aval une partie annulaire abradable 6 coopérant à l'étanchéité de l'extrémité des aubes du rotor de soufflante 3 ; une partie annulaire supportant des panneaux acoustiques 7 destinés à diminuer le bruit provoqué par le flux secondaire ; une couronne externe 8 de fixation des aubes statoriques 5 du redresseur de soufflante 4 ; puis de nouveau une cartouche acoustique 9.

Si l'existence en elle-même de tous ces éléments est bien connue, c'est leur mode de réalisation et la combinaison de leurs modes de fixation respectifs entre eux qui fait l'objet de la présente invention, notamment en ce qui concerne la fixation des aubes du redresseur sur la couronne externe et les liens entre cette couronne externe et les éléments acoustiques amont et aval qui l'entourent.

La couronne externe 8 de fixation des aubes de redresseur est selon l'invention constituée par une cartouche annulaire monobloc réalisée en matériau composite. La cartouche 8 est composée de deux enveloppes (une enveloppe externe, une enveloppe interne) contenant une matrice interne.

Les enveloppes sont constitutuées de fibres de verre ou de fibres de carbone (ou les deux) liées par une résine.

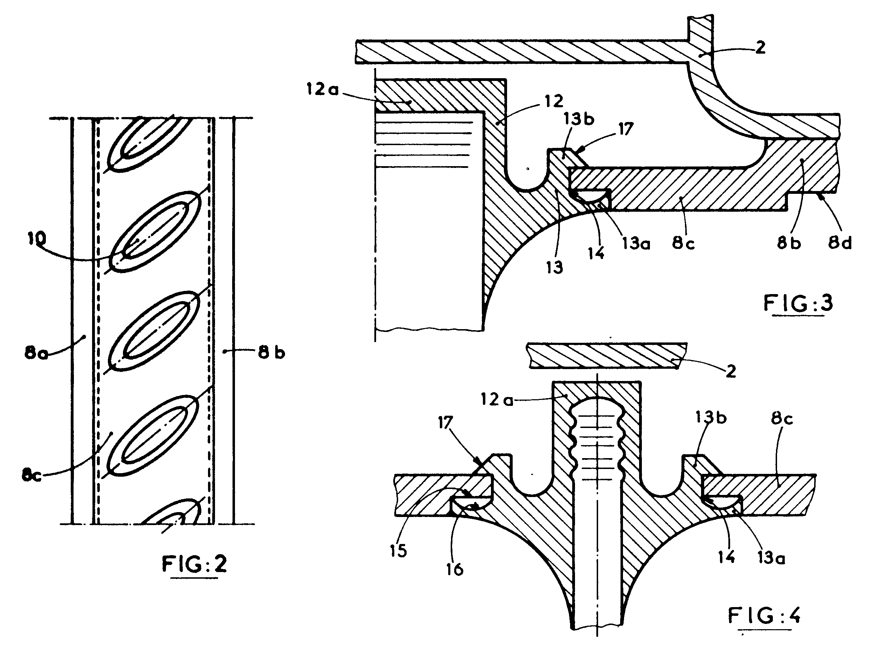

La matrice interne est constituée d'un anneau en nid d'abeilles ou de résine chargée de billes de silice creuses.
La cartouche 8 ainsi conformée, comporte deux parties latérales annulaires épaisses 8a, 8b dont les surfaces annulaires externes sont frettées sur le carter 2 et qui assurent la rigidité de la cartouche 8. Cette dernière comporte entre les bandes 8a, 8b une partie annulaire centrale amincie 8c dans laquelle sont découpées par estampage ou par tout autre moyen des encoches 10 destinées à la fixation des aubes 5 du redresseur. Le détail A de la figure 1 représenté à plus grande échelle aux figures 3 et 4 montre le mode d'accrochage des aubes sur la cartouche 8.

Les aubes 5 sont des aubes, dites lisses en ce sens qu'elles ne possèdent pas de plateforme ni en tête ni en pied et peuvent être réalisées en matériau composite à base de fibres de verre ou de kevlar ou encore en alliage léger d'aluminium ou de titane forgé ou filé.

Les têtes des aubes possèdent des stries 11 sur lesquelles sont surmoulés des chapeaux 12 réalisées en un matériau élastomère. Le chapeau 12 comporte un bord externe 13 élargi comportant deux lèvres 13a et 13b définissant entre elles une rainure circulaire 14. Cette rainure coopère avec l'encoche 10 de la partie 8c de la cartouche 8. D'autre part, le chapeau élastomère surmoulé 12 peut comporter dans le prolongement de l'aube 10 une surépaisseur 12a qui dans une variante, peut après le montage venir au contact de la paroi interne du carter 2 afin de jouer un rôle de tampon amortisseur de vibrations entre aube et carter.

Les encoches 10 quant à elles possèdent sur leur bord radialement interne un lamage 15 qui les entoure entièrement pour recevoir la lèvre 13a du chapeau 12, cette dernière possédant un bord supérieur concave 16 destiné à permettre leur déformation lors de leur mise en place. En outre afin de faciliter celle-ci, la lèvre 13b comporte un bord supérieur tronconique 17 destiné à permettre l'introduction du chapeau dans l'encoche 10.

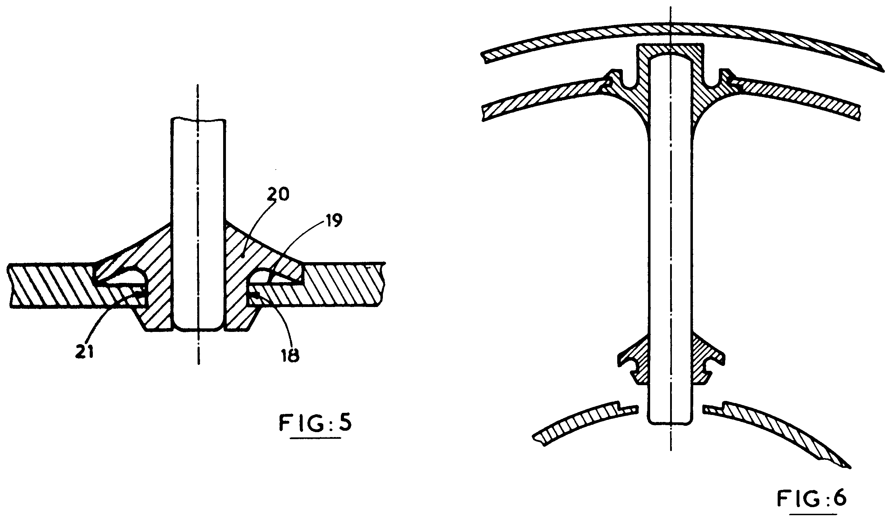

Le montage de l'aube dans la cartouche frettée 8 s'effectue de la façon suivante (figure 5 et 6).

L'aube est équipée de fabrication de son chapeau surmoulé 12 et on dispose sur la partie basse de l'aube un joint élastomère coulissant 20 comportant une gorge 18 qui coopèrera avec un soyage 19 d'une encoche 21 du carter intermédiaire 1.

On glisse l'aube dans l'encoche 21 du carter 1 puis on la remonte dans l'encoche 10 de la cartouche 8 jusqu'à ce que, après introduction du bord tronconique 17, la lèvre 13b soit passée à l'extérieur de la partie 8c et que la lèvre 13a soit en place dans le lamage 15. Ensuite on met en place le joint 20 par glissement le long de l'aube jusqu'à son encastrement dans l'encoche 21 du carter 1.

La cartouche frettée 8 comporte sur ses bords latéraux amont et aval des embrèvements 8d sur lesquels sont vissés en 22 les panneaux ou cartouches acoustiques 7 et 9.

De la sorte par le vissage des panneaux 7 et 9 directement sur la cartouche frettée 8, il n'est pas nécessaire de prévoir des surépaisseurs du carter pour des taraudages de vis de fixation des panneaux acoustiques comme cela se faisait dans le passé et on simplifie ainsi la fabrication des viroles du carter externe 2.

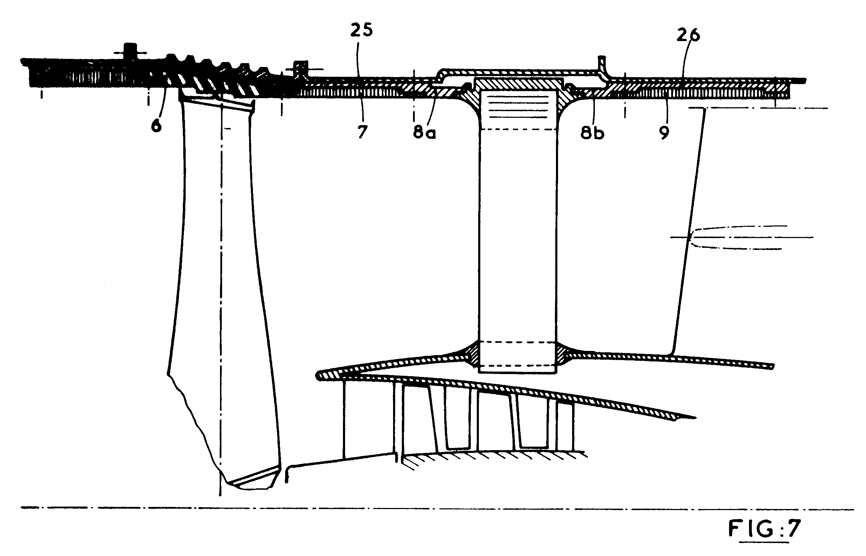

Dans une variante de réalisation montrée à la figure 7, la cartouche 8 frettée peut comporter un prolongement amont 25 et aval 26 monobloc qui servira de support à l'abradable 6, aux aubes 5 du redresseur et aux panneaux acoustiques et qui pourra constituer un sous-ensemble unitaire pouvant être retiré intégralement du carter 2, ce qui peut constituer un avantage au niveau de la maintenance car cela permet un échange standard très rapide de ce sous-ensemble, qui peut alors être réparé, si besoin est, en atelier sans immobiliser le moteur complet pendant une longue durée.

L'invention s'applique donc avec bénéfice au turboréacteurs double flux d'aviation à maintenance réduite.

## Revendications

1. Turboréacteur multiflux à redresseur de soufflante du genre comportant un étage d'aubes fixes sans plateformes régulièrement disposées entre une couronne interne et une couronne externe caractérisé en ce que la couronne externe est une cartouche annulaire monobloc (8) en matériau composite comportant d'une part deux bandes latérales (8a, 8b) pleines dont la surface externe est frettée à l'intérieur du carter externe (2) de flux froid du turboréacteur et dont la surface interne comporte deux embrêvements (8d) latéraux de support des bords de panneaux acoustiques (7, 9) disposés en amont et en aval de ladite cartouche, et d'autre part entre les deux bandes latérales une partie centrale (8c) amincie les reliant et percée d'encoches (10) de fixation des aubes (5) de redresseur et en ce que, coopérant avec lesdites encoches, l'extrémité radialement externe de la pale de chaque aube (5) du redresseur est surmontée d'un chapeau (12) en élastomère surmoulé sur des stries (11) de ladite extrémité, ledit chapeau comportant un bord externe (13) élargi possédant une rainure (14) délimitant deux lèvres (13a, 13b), l'une externe (13b) venant s'accrocher sur la face externe de l'encoche (10) de la partie centrale amincie (8c) de la cartouche et l'autre, interne (13a) venant se loger dans un lamage (15) entourant l'encoche (10) sur la face radialement interne de la cartouche (8).

2. Turboréacteur multiflux selon la revendication 1 caractérisé en ce que le chapeau surmoulé (12) comporte dans le prolongement de l'aube une surépaisseur (12a) venant en appui sur le carter externe (2) pour assurer un amortissement accru des vibrations subies par l'aube.

3. Turboréacteur multiflux selon l'une des revendications 1 ou 2 caractérisé en ce que les aubes (5) sont montées par mise en place dans la couronne interne, encastrement de la rainure du chapeau (12) dans l'encoche (10) de la cartouche externe puis glissement d'un joint (20) venant s'encastrer en pied dans la couronne interne.

4. Turboréacteur multiflux selon l'une quelconque des revendications 1 à 3 caractérisé en ce que les panneaux acoustiques amont (7) et aval (9) sont fixés sur la cartouche frettée (8) par des vis disposées au niveau des embrêvemenns latéraux (8d) de ladite cartouche.

5. Turboréacteur multiflux selon l'une des revendications 1 à 4 caractérisé en ce que la cartouche externe du redresseur est intégré de façon monobloc à une virole constituant le support des anneaux acoustiques et une cartouche abradable pour l'étanchéité de l'aubage de rotor de soufflante.

## Claims

1. Bypass turbojet engine with fan flow-straightener of the type comprising a stage of fixed platformless blades evenly arranged between an inner ring and outer ring characterised in that the outer ring is a one-piece annular shell (8) in a composite material comprising on the one hand two solid lateral bands (8a, 8b) of which the outer surface is shrink-fitted to the inside of the outer casing (2) of the cold flow of the turbojet engine and of which the inner surface comprises two lateral rebates (8d) for supporting the edges of acoustic panels (7, 9) placed upstream and downstream of the said shell, and on the other hand, between the two lateral bands a thinned-down central part (8c) connecting them and pierced with slots (10) for fixing the blades (5) of the flow-straightener and in that, engaging with the said slots, the radially outer end of the shaft of each straightener blade (5) is topped by a capping (12) in an elastomer moulded over striations (11) on the said end, the said capping comprising a widened outer rim (13) with a groove (14) defining two lips (13a, 13b), the outer one (13b) locking over the outer face of the slot (10) in the central thinned-down part (8c) of the shell and the other, inner (13a) lodging in a rebate (15) surrounding the slot (10) on the radially inner face of the shell (8).

2. Bypass turbojet engine in accordance with Claim 1 characterised in that the moulded capping (12) comprises in the extension of the blade, a thicker part (12a) bearing against the outer casing (2) to provide increased damping of the vibrations suffered by the blade.

3. Bypass turbojet engine in accordance with either of Claims 1 or 2 characterised in that the blades (5) are assembled by being fitted into the inner ring, the groove in the capping (12) being fitted into the slot (10) of the outer shell then a gland (20) being slid until it fits into the inner annulus at the foot of the blade.

4. Bypass turbojet engine in accordance with any of Claims 1 to 3 characterised in that the upstream acoustic panels (7) and downstream (9) are fixed to the shell (8) by bolts placed at the point of the lateral rebates (8d) of the said shell.

5. Bypass turbojet engine in accordance with any of Claims 1 to 4 characterised in that the outer shell of the flow-straightener is incorporated in a one-piece shell constituting the support for the acoustic panels and an abradable lining in order to achieve an air seal for the blades of the fan rotor.

## Patentansprüche

1. Mehrkreis-Turboluftstrahltriebwerk mit einem Bläser-Leitapparat mit einer Stufe von festen plattformlosen Schaufeln, die in regelmäßiger Verteilung zwischen einem inneren und einem äußeren Kranz angeordnet sind,
**dadurch gekennzeichnet,**
daß der äußere Kranz von einer aus einem Block bestehenden ringförmigen Kartusche (8) aus einem Verbundwerkstoff gebildet ist mit
- einerseits zwei vollen Seitenbändern (8a, 8b), deren Außenfläche innen in das äußere Gehäuse (2) für den kalten Strom des Turboluftstrahltriebwerks eingeschrumpft ist und deren Innenfläche zwei seitliche Vertiefungen (8d) zur Halterung der Ränder von auf der stromaufwärtigen und auf der stromabwärtigen Seite der Kartusche angeordneten Schallschluckplatten (7, 9) aufweist, und
- andererseits einem zwischen den beiden Seitenbändern angeordneten und diese miteinander verbindenden dünner ausgebildeten zentralen Teil (8c), der von Schlitzen (10) zur Befestigung der Schaufeln (5) des Leitapparats durchdrungen wird,
und daß der mit den genannten Schlitzen zusammenwirkende radial äußere Endbereich des Blatts jeder Leitschaufel (5) von einer Kappe (12) überdeckt ist, die durch Umspritzen von in dem genannten Endbereich vorgesehenen Rillen mit einem Elastomer gebildet ist und einen verbreiterten Außenrand (13) mit einer Nut (14) aufweist, die zwei Lippen (13a. 13b) begrenzt, wobei die äußere (13b) dieser Lippen sich an der Aussenseite des Schlitzes (10) in dem dünner ausgebildeten zentralen Teil (8c) der Kartusche (8) verhakt und die innere Lippe (13a) in einer Absenkung aufgenommen ist, die den Schlitz (10) auf der radial inneren Seite der Kartusche (8) umschließt.

2. Mehrkreis-Turboluftstrahltriebwerk nach Anspruch 1, dadurch gekennzeichnet, daß die durch Umspritzen gebildete Kappe (12) in Verlängerung der Schaufel einen Überstand bildet, der sich an dem äußeren Gehäuse (2) abstützt, um eine erhöhte Dämpfung der Vibrationen herbeizuführen, denen die Schaufel ausgesetzt sind.

3. Mehrkreis-Turboluftstrahltriebwerk nach einem der Ansprüche 1 oder 2, dadurch gekennzeichnet, daß die Schaufeln (5) montiert werden durch
- Positionieren in dem inneren Kranz,
- Einspannen der Nut der Kappe (12) in dem Schlitz (10) der äußeren Kartusche und
- Aufschieben einer Dichtung (20), die sich am Fuß in dem inneren Kranz verspannt.

4. Mehrkreis-Turboluftstrahltriebwerk nach einem der Ansprüche 1 bis 3, dadurch gekennzeichnet, daß die stromaufwärtigen (7) und die stromabwärtigen (9) Schallschutzplatte an der eingeschrumpften Kartusche (8) mit Schrauben befestigt sind, die in Höhe der seitlichen Vertiefungen (8d) der Kartusche angeordnet sind.

5. Mehrkreis-Turboluftstrahltriebwerk nach einem der Ansprüche 1 bis 4, dadurch gekennzeichnet, daß die äußere Kartusche des Leitapparats einstückig in einem Mantel integriert ist, der die Halterung der Schallschutzplatten und einer verschleißbaren Kartusche zur Abdichtung der Rotorbeschaufelung des Bläsers bildet.
